# EUROPEAN PATENT SPECIFICATION

(11) **EP 4 098 798 B1**
(45) Date of publication and mention of the grant of the patent: **27.03.2024**
(21) Application number: 21305731.8
(22) Date of filing: 01.06.2021
(51) Int. Cl.: D06M 11/81, D06M 14/22, D06M 14/28, D06M 14/34, D06M 15/277, D06M 15/356, D06M 23/08, D06M 11/79, D06M 13/213, D06M 13/352, D06M 13/355, C08G 61/12, C08G 73/02, C08G 73/06

(54) **PROCESS FOR PREPARING A POLYMER-COATED TEXTILE HAVING OMNIPHOBIC PROPERTIES**
VERFAHREN ZUR HERSTELLUNG EINES POLYMERBESCHICHTETEN TEXTILS MIT OMNIPHOBEN EIGENSCHAFTEN
PROCÉDÉ DE PRÉPARATION D'UN TEXTILE REVÊTU DE POLYMÈRE AYANT DES PROPRIÉTÉS OMNIPHOBES

(43) Date of publication of application: 07.12.2022
(73) Proprietor: Université Côte d'Azur, 06100 Nice Cedex 2 (FR)
(72) Inventor: FRADIN, Caroline, 06100 NICE (FR); SALAPARE, Hernando III, 06000 NICE (FR); DARMANIN, Thierry, 06000 NICE (FR); AMIGONI, Sonia, 06200 NICE (FR); GUITTARD, Frédéric, 83700 SAINT-RAPHAËL (FR)
(74) Representative: Cabinet Becker et Associés

(56) References cited:
- ZHOU XIAOYAN ET AL: "Fabrication of super-repellent cotton textiles with rapid reversible wettability switching of diverse liquids", APPLIED SURFACE SCIENCE, ELSEVIER, AMSTERDAM, NL, vol. 276, 29 March 2013 (2013-03-29), pages 571-577, XP028535428, ISSN: 0169-4332, DOI: 10.1016/J.APSUSC.2013.03.135
- DATABASE WPI Week 201308 Thomson Scientific, London, GB; AN 2012-N86931 XP002804736, & CN 102 619 093 A (BEIJING DRESS COLLEGE) 1 August 2012 (2012-08-01)
- DATABASE WPI Week 201908 Thomson Scientific, London, GB; AN 2018-88506Q XP002804737, & CN 108 755 137 A (BEIJING INST FASHION TECHNOLOGY) 6 November 2018 (2018-11-06)
- DATABASE WPI Week 200741 Thomson Scientific, London, GB; AN 2007-429440 XP002804738, & KR 2006 0091134 A (UNIV KYUNGPOOK NAT IND ACADEMIC COOP) 18 August 2006 (2006-08-18)

## Description

### TECHNICAL FIELD

The present invention relates to a process for preparing a textile coated with a conducting polymer functionalized with fluorinated chains. It also relates to a coated textile obtainable by such a process.

### TECHNICAL BACKGROUND

Hydrophobic and oleophobic surfaces have been extensively studied in the past few years, such surfaces being bio-inspired by various plant leaves, the water strider or butterfly wings. In the literature, many oleophobic coatings were formed on textile fabrics using different processes and materials: dip-coating of fluorinated silsesquioxane polyhedric oligomers (POSS) [1] or fluorinated copolymers [2], Chemical Vapor Deposition (CVD) of fluorinated silane [3] or silicone nanofilaments [4] covered by a fluorinated coating with Plasma Enhanced Chemical Vapor Deposition (PECVD) [5]. PECVD was also used to homogeneously polymerize perfluorodecylacrylate [6] and obtain oleophobic fabrics. Many techniques also employed nanoparticles which add a nanometric roughness to the micrometric one already formed by the meshes of the textile and therefore enhance the oleophobicity [7]. Oleophobic properties were also obtained on textile using conducting polymers such as polyaniline by wet processing [8], polypyrrole [9], and polythiophene [10] by CVD.

The resistance of the polymer coating and its adherence to the textile fibers are crucial, and various methods have been developed in order to improve these features, in particular adding layers between the conducting polymers (polyaniline or polypyrrole) and the textile [11], processing solvent treatments [12], or laser treatments for nanocellulose coating [13].

Further disclosures relating to the production of hydrophobic and olephobic surfaces can be found in the following documents : CN 102 619 093 A, CN 108 755 137 A, KR 2006 0091134 A, and the non patent litterature : ZHOU XIAOYAN ET AL: "Fabrication of super-repellent cotton textiles with rapid reversible wettability switching of diverse liquids",APPLIED SURFACE SCIENCE, ELSEVIER, AMSTERDAM, NL, vol. 276, 29 March 2013 (2013-03-29), pages 571-577.

However, such methods have many disadvantages: in particular, laser techniques are expensive and thus cannot be easily used at the industrial level, and solvent treatments are very polluting and water-consuming.

Hence, there remains a need to develop a simple and cost-effective process for producing a textile coated with a hydrophobic and/or oleophobic layer, wherein the adherence and resistance of the coating are improved.

### SUMMARY OF THE INVENTION

In this context, the inventors have demonstrated that applying a plasma treatment to a textile for subsequently inducing a graft polymerization of a functionalized conducting monomer onto said textile, gave access to a well-adhered polymer coating covalently linked to the textile. The resulting polymer coating was then successfully functionalized with covalently bonded fluorinated chains, in order to give the surface oleophobic and/or hydrophobic properties. Interestingly, the inventors have also shown that copolymerization of the conducting monomer with cross-linkers or nanoparticles-functionalized co-monomers could further improve the performances of the coating.

Thus, the present invention relates to a process comprising the following successive steps:
(a) irradiating a textile with plasma;
(b) contacting the irradiated textile of step (a) with a solution comprising a compound of formula (I):

   X-Y-Q (I),

   wherein
   X is a conducting monomer residue,
   Y is a C₁-C₁₂ aliphatic linker, and
   Q is -OH, -NH₂, or -C(O)OR, wherein R is a hydrogen or a C₁-C₆ hydrocarbon group,
   under conditions allowing to form a conducting polymer at least partially coated on the textile, covalently bonded thereto, and comprising monomer units of formula (II): 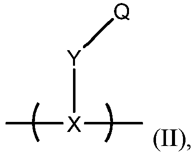 wherein
   X is a conducting monomer residue,
   Y is a C₁-C₁₂ aliphatic linker, and
   Q is -OH, -NH₂, or -C(O)OR, wherein R is a hydrogen or a C₁-C₆ hydrocarbon group; and
(c) contacting the coated textile of step (b) with a fluorinated carboxylic acid of formula (III):

   Q'-(Z1)ₙ-Z2 (III),

   wherein
   n is 0 or 1,
   Z1 is a C₁-C₁₂ aliphatic linker,
   Z2 is a C₁-C₁₂ perfluoroalkyl, and
   Q' is -OH, -NH₂, or -C(O)OR, wherein R is a hydrogen or a C₁-C₆ hydrocarbon group,
   under conditions allowing to form an ester or amide bond between Q of at least one monomer unit of formula (II) and Q' of said fluorinated carboxylic acid of formula (III).

It also relates to a material comprising a textile covalently bonded to and at least partially coated with a conducting polymer comprising at least one monomer unit of formula (V): 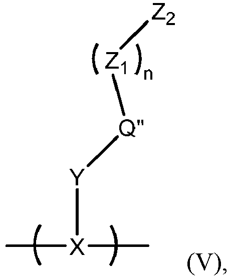 wherein
n is 0 or 1,
X is a conducting monomer residue,
Y is a C₁-C₁₂ aliphatic linker,
Z1 is a C₁-C₁₂ aliphatic linker,
Z2 is a C₁-C₁₂ perfluoroalkyl, and
Q" is an ester or amide function.

### BRIEF DESCRIPTION OF THE FIGURES

Figure 1 shows SEM images of plasma treated nylon and cotton fabrics (Nylon - 305 V, Nylon - 452 V, Cotton - 394 V) compared with untreated nylon and cotton fabrics.
Figure 2 shows SEM images of various coated nylons prepared according to the process of the invention.
Figure 3 shows water contact angles for pure nylon, nylon coated with a plasma-induced polymer of pyrrole-OH, nylon coated with a plasma-induced co-polymer of pyrrole-OH and Py-Cₙ-Py, nylon coated with a plasma-induced co-polymer of pyrrole-OH and silica nanoparticles-functionalized 4-(3-pyrrolyl)butyric acid monomer.
Figure 4 shows EDX analyses of textiles coated according to the process of the invention (A: cotton - B: nylon).
Figure 5 shows contact angles variations measured before and after an adherence test on various nylons coated according to the process of the invention.
Figure 6 shows contact angles variations measured before and after an adherence test on various cottons coated according to the process of the invention.

### DETAILED DESCRIPTION OF THE INVENTION

The terms mentioned herein with prefixes such as for example C₁-C₆, C₁-C₁₂ or C₂-C₁₂ can also be used with lower numbers of carbon atoms such as C₁-C₂, C₁-C₉, or C₂-C₅. If, for example, the term C₁-C₆ is used, it means that the corresponding hydrocarbon chain may comprise from 1 to 6 carbon atoms, especially 1, 2, 3, 4, 5 or 6 carbon atoms. If, for example, the term C₂-C₅ is used, it means that the corresponding hydrocarbon chain may comprise from 2 to 5 carbon atoms, especially 2, 3, 4, or 5 carbon atoms.

As used herein, the term "C₁-C₁₂ aliphatic linker" refers to a linear or branched (preferably linear), saturated or unsaturated, acyclic, non-aromatic hydrocarbon divalent chain having 1 to 12 carbon atoms. The C₁-C₁₂ aliphatic linker may in particular be a C₁-C₁₂ alkylene linker or a C₁-C₁₂ alkenylene linker.

As used herein, a "C₁-C₁₂ alkylene linker" is a linear or branched (preferably linear), saturated, acyclic, non-aromatic hydrocarbon divalent chain having 1 to 12 carbon atoms. The C₁-C₁₂ alkylene linker may in particular be represented by the formula -(CH₂)ₖ- wherein k is an integer from 1 to 12.

As used herein, a "C₁-C₁₅ alkylene linker" is a linear or branched (preferably linear), saturated, acyclic, non-aromatic hydrocarbon divalent chain having 1 to 15 carbon atoms. The C₁-C₁₅ alkylene linker may in particular be represented by the formula -(CH₂)_{q}- wherein q is an integer from 1 to 15.

As used herein a "C₁-C₁₂ alkenylene linker" is a linear or branched (preferably linear), unsaturated, acyclic, non-aromatic hydrocarbon divalent chain comprising at least one carbon-carbon double bond, and having 1 to 12 carbon atoms.

As used herein, a "C₁-C₆ hydrocarbon group" refers to a linear or branched, saturated or unsaturated, cyclic or acyclic, aromatic or non-aromatic hydrocarbon group having 1 to 6 carbon atoms. The "C₁-C₆ hydrocarbon group" may in particular be a C₁-C₆ alkyl, C₂-C₆ alkenyl, C₃-C₆ cycloalkyl, or aryl, preferably a C₁-C₆ alkyl.

As used herein, "C₁-C₆ alkyl group" refers to a linear or branched, saturated, acyclic hydrocarbon chain, having 1 to 6 carbon atoms. Examples of C₁-C₆ alkyl group include, but are not limited to, methyl, ethyl, propyl, isopropyl, butyl, isobutyl, pentyl, or hexyl.

As used herein, "C₂-C₆ alkenyl group" refers to a linear or branched, acyclic hydrocarbon chain having at least one carbon-carbon double bond, and having 2 to 6 carbon atoms. Examples of C₂-C₆ alkenyl group include, but are not limited to, ethenyl, propenyl, isopropenyl, butenyl, isobutenyl, pentenyl, hexenyl.

As used herein, "C₃-C₆ cycloalkyl group" refers to a saturated or unsaturated, mono-, bi-, or tricyclic, optionally bridged, hydrocarbon chain, having 3 to 6 carbon atoms. Examples of C₃-C₆ cycloalkyl group include, but are not limited to, cyclopropyl, cyclobutyl, cyclopentyl, cyclohexyl.

As used herein, "aryl" refers to a mono- or bi-cyclic aromatic hydrocarbon group, such as phenyl.

As used herein, a "C₁-C₁₂ perfluoroalkyl" is a linear or branched (preferably linear), saturated, acyclic, non-aromatic hydrocarbon chain having 1 to 12 carbon atoms, wherein all the hydrogen atoms are replaced with fluorine atoms.

As used herein, the term "textile" refers to any material comprising natural or synthetic fibers. The fibers of the textile subjected to the process of the invention may be in a spun state, thereby forming a thread (or a yarn) or a plurality thereof. The textile may be a woven, non-woven, or knitted textile (or fabric). The textile may have any shape and any size.

Examples of textile include, but are not limited to, wool, silk, cotton, linen, bamboo, viscose, rayon, cellulose, polyester, polyamide (in particular, nylon), acrylic, or elastane. As used herein, the term "nylon" includes any type of nylon, such as nylon 6, nylon 66, nylon 6/6-6, nylon 6/9, nylon 6/10, nylon 6/12, nylon 11, or nylon 12.

Preferably, the textile is cotton or nylon.

According to the process of the invention, said textile is subjected to a plasma treatment (step (a)). Such plasma treatment is applied to at least a part of a surface of the textile. In a particular embodiment, the textile is a fabric comprising two sides, and is treated with plasma according to step (a) of the process of the invention, on one of its two sides.

Any suitable plasma device known to the skilled artisan may be used for such treatment. In a typical embodiment, the textile is inserted into a chamber of a plasma device, which also comprises an electrode for generating plasma from a gas. Vacuum is advantageously applied before injection of said gas into the chamber. The pressure under vacuum may be less than or equal to 0.5 mbar, preferably less than or equal to 0.1 mbar, for instance between 0.001 mbar and 0.1 mbar. After injection of the gas, the pressure may for instance be comprised between 0.05 mbar and 1 mbar, preferably between 0.1 mbar and 0.5 mbar.

The gas may in particular be air, dioxygen (O₂), nitrogen (N₂), argon (Ar), hydrogen (H₂), ammonia (NH₃), or a mixture thereof.

Preferably, said plasma is an air or O₂ plasma. More preferably, said plasma is an O₂ plasma. The plasma parameters, including the power, the duration of the irradiation, and the DC self-bias voltage can be adjusted by the skilled artisan, in particular depending on the features of the textile (e.g. type, shape, size) and the features of the plasma device.

In particular, the textile may be irradiated at a power comprised between 10 W and 600 W, preferably between 50 W and 300 W. Such plasma irradiation may be applied for a duration comprised between 30 seconds and 30 minutes, preferably between 60 seconds and 15 minutes. The plasma irradiation can be carried out under a DC self-bias voltage comprised between 200 V and 600 V, preferably between 300 V and 500 V.

Step (a) of the process of the invention allows to produce a plasma-treated textile (or "irradiated textile").

The plasma treatment is applied to said textile for the purpose of creating reactive species onto the surface of the textile, and thereby subsequently inducing a graft polymerization of a functionalized conducting monomer onto said textile. The process of the invention is advantageously carried out without adding an external polymerization catalyst (for instance, a polymerization oxidant such as ammonium persulfate). As used herein, an "external polymer catalyst" refers to a separate chemical reactant added during implementation of the process of the invention (for instance in step (b)) to trigger, induce, or catalyze polymerization.

Step (b) of the process of the invention comprises contacting the irradiated textile of step (a) with a solution comprising a compound of formula (I):

X-Y-Q (I),

wherein
X is a conducting monomer residue,
Y is a C₁-C₁₂ aliphatic linker, and
Q is -OH, -NH₂, or -C(O)OR, wherein R is a hydrogen or a C₁-C₆ hydrocarbon group.

As used herein, a "conducting monomer" refers to an organic compound which is able to polymerize to form a conducting polymer, namely an organic polymer that conducts electricity. Conducting monomers are well-known to the skilled artisan, and are typically conjugated or aromatic, cyclic or acyclic hydrocarbons, preferably comprising one or more heteroatoms (such as S, N, and O). Examples of conducting monomers include, but are not limited to, pyrroles, anilines, carbazoles, indoles, azepines, thiophenes, 3,4-ethylenedioxythiophenes, fluorenes, phenyl vinyl sulfoxide, xylylene bis(tetrahydrothiophenium chloride), or a combination thereof.

As used herein, a "conducting monomer residue" is a conducting monomer as defined herein, deprived of an atom or a group of atoms, but having its conducting structure (i.e. the conjugated or aromatic backbone) preserved. Typically, said atom or group of atoms is a hydrogen atom.

In formula (I), said atom or group of atoms is replaced with a -Y-Q moiety. The compound of formula (I) can be defined as a conducting monomer functionalized with a -Y-Q moiety.

In a particular embodiment, X is a residue of pyrrole, thiophene, 3,4-ethylenedioxythiophene, aniline, or a combination thereof, preferably a residue of pyrrole, thiophene, or 3,4-ethylenedioxythiophene, and more preferably a residue of pyrrole.

In an even more preferred embodiment, X is represented by the following formula (X-I):

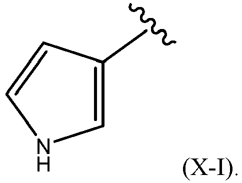

As used herein, the symbol 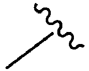 represents the bond by which a moiety is attached to the remainder of the molecule. In formula (X-I), said symbol represents the bond between the conducting monomer residue as represented and the moiety Y-Q, to give a compound of formula (I).

According to the present invention, Y is a C₁-C₁₂ aliphatic linker, for instance a C₁-C₁₀, C₁-C₈, C₁-C₆ or C₂-C₆ aliphatic linker.

Preferably, Y is a C₁-C₁₂ alkylene linker.

Examples of C₁-C₁₂ alkylene linker are a methylene (e.g. -CH₂-), an ethylene (e.g. -(CH₂)₂-), a propylene (e.g. -(CH₂)₃-), a butylene (e.g. -(CH₂)₄-), a pentylene (e.g. -(CH₂)₅-), a hexylene (e.g. -(CH₂)₆-), a heptylene (e.g. -(CH₂)₇-), an octylene (e.g. -(CH₂)₈-), a nonylene (e.g. -(CH₂)₉-), a decylene (e.g. -(CH₂)₁₀-), an undecylene (e.g. -(CH₂)₁₁-), or a dodecylene (e.g. -(CH₂)₁₂-).

Y may in particular be a C₁-C₁₀, C₁-C₈, C₁-C₆ or C₂-C₆ alkylene linker.

Preferably, Y is a C₁-C₆ alkylene linker, more preferably an ethylene (e.g. -(CH₂)₂-).

Q is a function that is able to react with Q' of a compound of formula (III), to form an ester or amide function. Q is chosen from -OH, -NH₂, and -C(O)OR, wherein R is a hydrogen or a C₁-C₆ hydrocarbon group.

In a particular embodiment, R is a hydrogen, a C₁-C₆ alkyl, C₂-C₆ alkenyl, C₃-C₆ cycloalkyl, or a phenyl, preferably R is a hydrogen or a C₁-C₆ alkyl. More preferably, R is a hydrogen, a methyl or an ethyl. Even more preferably, R is a hydrogen.

Preferably, Q is -OH.

In a preferred embodiment, the compound of formula (I) is represented as follows:

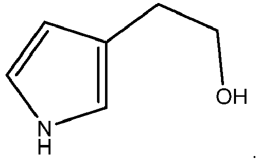

The solution in step (b) may further comprise other co-monomers or cross-linkers, which contain one or more conducting monomer residues. Such co-monomers or cross-linkers are able to polymerize with the compound of formula (I) so as to form a conducting co-polymer.

In a particular embodiment, the solution in step (b) further comprises the following cross-linker of formula (IV):

X'-Y'-X' (IV),

wherein each X' is a conducting monomer residue, and Y' is a C₁-C₁₅ alkylene linker.

Each X' can be different or identical to each other (preferably identical). Each X' can be different or identical to X.

In a particular embodiment, each X' is a residue of pyrrole, thiophene, 3,4-ethylenedioxythiophene, aniline, or a combination thereof, preferably a residue of pyrrole, thiophene, or 3,4-ethylenedioxythiophene, more preferably a residue of pyrrole.

Y' is a C₁-C₁₅ alkylene linker. Examples of C₁-C₁₅ alkylene linker are a methylene (e.g. -CH₂-), an ethylene (e.g. -(CH₂)₂-), a propylene (e.g. -(CH₂)₃-), a butylene (e.g. -(CH₂)₄-), a pentylene (e.g. -(CH₂)₅-), a hexylene (e.g. -(CH₂)₆-), a heptylene (e.g. -(CH₂)₇-), an octylene (e.g. -(CH₂)₈-), a nonylene (e.g. -(CH₂)₉-), a decylene (e.g. -(CH₂)₁₀-), an undecylene (e.g. -(CH₂)₁₁-), a dodecylene (e.g. -(CH₂)₁₂-), a tridecylene (e.g. -(CH₂)₁₃-) a tetradecylene (e.g. -(CH₂)₁₄-) a pentadecylene (e.g. -(CH₂)₁₅-).

Preferably, Y' is a C₃-C₁₀ alkylene linker, more preferably a propylene (e.g. -(CH₂)₃-), a hexylene (e.g. -(CH₂)₆-), or a decylene (e.g. -(CH₂)₁₀-).

In a preferred embodiment, the cross-linker of formula (IV) is represented as follows: 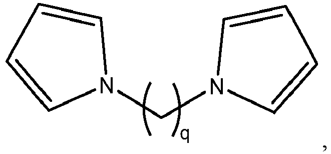 wherein q is an integer from 1 to 15 (preferably from 3 to 10, such as 3, 6, or 10).

In another particular embodiment, the solution in step (b) further comprises nanoparticles functionalized with at least one conducting monomer residue (hereinafter, X"). The nanoparticles functionalized with at least one conducting monomer residue can equivalently be named "nanoparticles-functionalized co-monomer". The nanoparticles may in particular be silica, titania, cerium oxide or carbon black nanoparticles. Preferably, the nanoparticles are silica nanoparticles.

Said conducting monomer residue (X") may be different or identical to X and/or X'. In a particular embodiment, X" is a residue of pyrrole, thiophene, 3,4-ethylenedioxythiophene, aniline, or a combination thereof, preferably a residue of pyrrole, thiophene, or 3,4-ethylenedioxythiophene, more preferably a residue of pyrrole.

As used herein, the term "nanoparticle" refers to a particle having a nanometric size, in particular having a mean diameter equal to or less than 500 nm, for instance a mean diameter between 5 nm and 500 nm. Preferably, the nanoparticles have a mean diameter comprised between 10 nm and 200 nm, more preferably between 20 nm and 100 nm.

The standard deviation of nanoparticles diameters is advantageously less than or equal to 25%, preferably less than or equal to 20%. The distribution of nanoparticle diameters may be unimodal or multimodal, preferably unimodal. The mean diameter of the nanoparticles, standard deviation and diameters distribution can be determined, in particular, by statistical studies of microscopy images, for example, those generated by scanning electron microscopy (SEM) or transmission electron microscopy (TEM). It must be emphasized that the mean diameter, as used herein, refers to the mean diameter of said nanoparticles being functionalized with at least one conducting monomer residue.

The nanoparticles and the at least one conducting monomer residue are advantageously separated by a hydrocarbon linker (hereinafter, Y"). Such hydrocarbon linker may have 1 to 15 carbon atoms, may be linear or branched (preferably linear), saturated or unsaturated (preferably saturated), cyclic or acyclic (preferably acyclic), and may optionally comprise at least one heteroatom (such as -O-, -N-, or -S-) or at least one chemical group (such as an amide (-C(O)-NH-).

In a preferred embodiment, Y" is represented as follows:

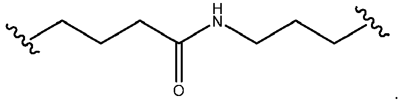

In another preferred embodiment, the nanoparticle (preferably silica nanoparticle) is functionalized with one or more moieties having the following formula (-Y"X"):

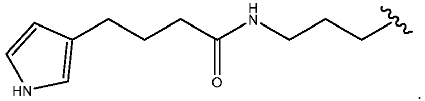

The solvent of the solution in step (b) may be water, any suitable organic solvent (for instance an alcohol such as methanol, ethanol, or isopropanol), or a mixture thereof. In a preferred embodiment, said solvent is water, ethanol or a mixture thereof.

The irradiated textile may be contacted with the solution comprising the compound of formula (I) (and optionally the other co-monomers or cross-linkers) by immerging or dipping the irradiated textile into said solution. The solution in step (b) may further comprise a polymerization counter-ion, which is typically used as stabilizing agent. Such polymerization counter-ions include, but are not limited to, organic sulfonic acids such as naphthalene sulfonic acid, p-toluene sulfonic acid, naphthalene disulfonic acid, or anthraquinone sulfonic acid. The irradiated textile and the solution may be contacted at room temperature, preferably for a duration comprised between 1 hour and 96 hours, preferably between 15 hours and 60 hours. As defined herein, the expression "room temperature" refers to a temperature comprised between 5 °C and 35 °C, preferably between 15 °C and 30 °C.

Step (b) of the process of the invention is carried out under conditions that allow to form a conducting polymer at least partially coated on the textile, covalently bonded thereto, and comprising monomer units of formula (II): 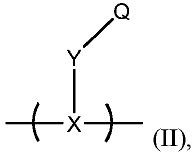 wherein X, Y and Q are as defined in formula (I).

In an embodiment where step (b) is carried out in the presence of co-monomers (such as nanoparticles functionalized with at least one conducting monomer residue X") and/or cross-linkers (such as a crosslinker of formula (IV)), the conducting (co)-polymer obtained in step (b) further comprises the corresponding monomer units, wherein the conducting monomer residue of said co-monomer (for instance X") or said cross-linker (such as X') is linked to the other conducting monomer residues of the polymer. In such embodiment, the distribution of the conducting monomer residues is typically random. An illustrative random distribution in a co-polymer formed from a compound of formula (I), a crosslinker of formula (IV), and nanoparticles functionalized with at least one conducting monomer residue X" is: -X"-X-X'-X-X"-X-X-X-X"-X'-X- (for the sake of clarity, only the conducting monomer residues are represented in this illustrative polymer).

In a particular embodiment, at least 20 %, at least 30 %, at least 40 %, at least 50 %, at least 60 %, at least 70 %, at least 80 %, at least 90 %, at least 95 %, or at least 98 % of the surface of the textile is coated with the conducting polymer.

Step (c) of the process of the invention comprises contacting the coated textile of step (b) (the coated textile obtained in step (b) may also be referred to as "intermediate coated textile") with a fluorinated carboxylic acid of formula (III):

Q'-(Z1)ₙ-Z2 (III),

wherein
n is 0 or 1,
Z1 is a C₁-C₁₂ aliphatic linker,
Z2 is a C₁-C₁₂ perfluoroalkyl, and
Q' is -OH, -NH₂, or -C(O)OR, wherein R is a hydrogen or a C₁-C₆ hydrocarbon group.

In particular embodiment, n is 1. In a preferred embodiment, Z1 is a C₁-C₆ alkylene linker. In a more preferred embodiment, Z1 is an ethylene linker.

According to the present invention, Z2 is a C₁-C₁₂ perfluoroalkyl.

In a particular embodiment, Z2 is a C₂-C₁₀ perfluoroalkyl. Preferably, Z2 is a C₄-C₈ perfluoroalkyl, such as nonafluorobutyl (e.g. -(CF₂)₃-CF₃), undecafluoropentyl (e.g. -(CF₂)₄-CF₃), a tridecafluorohexyl (e.g. -(CF₂)₅-CF₃), pentadecafluoroheptyl (e.g. -(CF₂)₆-CF₃), or heptadecafluorooctyl (e.g. -(CF₂)₇-CF₃).

More preferably, Z2 is a C₄-C₆ perfluoroalkyl, such as nonafluorobutyl (e.g. -(CF₂)₃-CF₃), undecafluoropentyl (e.g. -(CF₂)₄-CF₃), or a tridecafluorohexyl (e.g. -(CF₂)₅-CF₃).

Q' is -OH, -NH₂, or -C(O)OR wherein R is a hydrogen or a C₁-C₆ hydrocarbon group. In a particular embodiment, R is a hydrogen, a C₁-C₆ alkyl, C₂-C₆ alkenyl, C₃-C₆ cycloalkyl, or phenyl, preferably R is a hydrogen or a C₁-C₆ alkyl. More preferably, R is a hydrogen, a methyl or an ethyl. Even more preferably, R is a hydrogen.

In a preferred embodiment, Q' is -COOH.

The intermediate coated textile may typically be contacted with the compound of formula (III) by immerging or dipping the intermediate coated textile into a solution comprising said compound of formula (III). Advantageously, the solution in step (c) further comprises a coupling agent.

As used herein, a "coupling agent" is a compound that allows or facilitates the formation of the ester or amide group, starting from an alcohol (-OH) or amine (-NH₂), and a carboxylic acid (-COOH) or an ester thereof (-C(O)OR, R being a C₁-C₆ hydrocarbon group). Coupling agents are well known to the skilled artisan. Examples of such coupling agents include, but are not limited to, dicyclohexylcarbodiimide (DCC), N-ethyl-N'-carbodiimide (EDC), O-(7-azabenzotriazol-1-yl)-tetramethyluronium hexafluorophosphate (HATU), benzotriazole-tetramethyluronium hexafluorophosphate (HBTU), or a combination thereof.

The solution may also comprise a base and/or a catalyst, such as diisopropylethylamine (DIEA), pyridine, dimethylaminopyridine (DMAP), or a combination thereof.

The intermediate coated textile and the compound of formula (III) may be contacted at room temperature, preferably for a duration comprised between 10 hours and 10 days, preferably between 2 days and 7 days.

Step (c) is carried out under conditions that allow to form an ester or amide bond between Q of at least one monomer unit of formula (II) and Q' of said fluorinated carboxylic acid of formula (III), such that the conducting polymer obtained in step (c) comprises at least one monomer unit of formula (V): 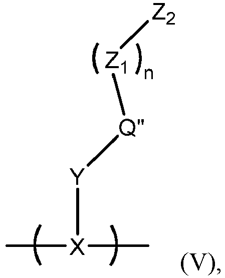 wherein Q" is an ester (namely -O-C(O)- or -C(O)-O-) or amide (namely -NH-C(O)- or -C(O)-NH-), and n, X, Y, Z1, and Z2 are as defined herein.

Q' in formula (III) and Q in formula (I) (and (II)) are chosen such that Q and Q' can react together to form an ester or amide function (Q").

In a particular embodiment, Q in formula (I) (and (II)) is -COOR (wherein R is as defined above), and Q' in formula (III) is -NH₂. In such embodiment, Q and Q' can react together to form an amide -C(O)-NH-.

In another particular embodiment, Q in formula (I) (and (II)) is -NH₂, and Q' in formula (III) is -COOR (wherein R is as defined above). In such embodiment, Q and Q' can react together to form an amide -NH-C(O)-.

In another particular embodiment, Q in formula (I) (and (II)) is -COOR (wherein R is as defined above), and Q' in formula (III) is -OH. In such embodiment, Q and Q' can react together to form an ester -C(O)-O-.

In a preferred embodiment, Q in formula (I) (and (II)) is -OH, and Q' in formula (III) is -COOR (wherein R is as defined above). In such embodiment, Q and Q' can react together to form an ester -O-C(O)-.

The amount of compound of formula (III) grafted onto the monomer units of formula (II) (namely the amount of monomer units of formula (V) obtained in step (c)) may in particular depend on the features of the compound of formula (III) (i.e. n, Z1, Z2), and the reaction conditions of step (c) such as the contacting time. Such features and conditions can be adjusted by the skilled artisan so as to obtain the desired oleophobic and/or hydrophobic properties. X-ray photoelectron spectroscopy (XPS) analysis can be used to determine said amount.

The process allows to obtain a textile covalently bonded to and at least partially coated with a conducting polymer comprising at least one monomer unit of formula (V): 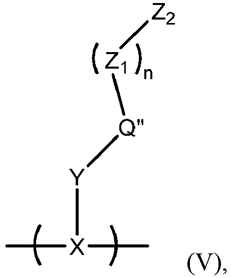 wherein
n is 0 or 1,
X is a conducting monomer residue,
Y is a C₁-C₁₂ aliphatic linker,
Z1 is a C₁-C₁₂ aliphatic linker,
Z2 is a C₁-C₁₂ perfluoroalkyl,
Q" is an ester (namely -O-C(O)- or -C(O)-O-) or amide (namely -NH-C(O)- or -C(O)-NH-).

In a particular embodiment, the coated textile obtained the process of the invention is such that one or more of the water, diiodomethane, and hexane contact angles are higher than or equal to 60°, 70°, 80°, 90°, 100°, 110°, or 120°.

Depending on the form of the textile subjected to the process of the invention, the coated textile obtained by the process of the invention may be subjected to one or more of the following steps:
- a spinning step,
- a woven or knitting step,
- a shaping step.

Various articles may be prepared with the coated textile, such as a cloth, a garment, or a tarp.

The present invention also relates to a coated textile obtained by the process of the invention.

Another object of the present invention is a material comprising (or consisting of) a textile covalently bonded to and at least partially coated with a conducting polymer comprising at least one monomer unit of formula (V): 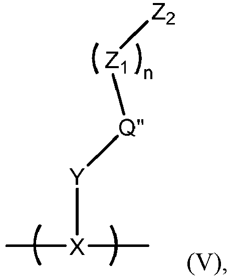 wherein
n is 0 or 1,
X is a conducting monomer residue,
Y is a C₁-C₁₂ alkylene linker,
Z1 is a C₁-C₁₂ alkylene linker,
Z2 is a C₁-C₁₂ perfluoroalkyl, and
Q" is an ester (namely -O-C(O)- or -C(O)-O-) or amide (namely -NH-C(O)- or -C(O)-NH-).

The particular and preferred embodiments described for the process of the invention apply to the material (or coated textile) of the invention. In particular, the particular and preferred embodiments described above for X and Y in formula (I) or (II), and for n, Z1 and Z2 in formula (III) respectively applies to X, Y, n, Z 1 and Z2 in formula (V).

The material (or coated textile) of the invention may be woven, non-woven, or knitted fabric. The material (or coated textile) of the invention may have any shape and any size. In a particular embodiment, the material (or coated textile) of the invention is a cloth, a garment, or a tarp. The invention will also be described in further detail in the following examples, which are not intended to limit the scope of this invention, as defined by the attached claims.

### EXAMPLES

### Material & Methods

Sefar Nitex^{®}nylon 6,6 fabrics (Sefar AG, Switzerland) of mesh sizes 100 µm and commercial cotton fabrics of approximative mesh sizes 100-150 µm were used in the experiments. The dimensions of textile samples were 2 × 4 cm. Pyrrole, 2-naphtalene sulfonic acid, fumed silica nanoparticles with a diameter of 14 nm, N-(3-dimethylaminopropyl)-N'-ethylcarbodiimide hydrochloride (EDC), N-hydroxy-succinimide (NHS), (3-aminopropyl) triethoxysilane, 4-(dimethylamino)pyridine (DMAP), 4-(3-pyrrolyl)butyric acid and solvents were purchased from Sigma Aldrich and used as received. 2-(1H-pyrrol-3-yl)ethanol (Pyrrole-OH), 1,3-di(1H-pyrrol-1-yl)propane, 1,6-di(1H-pyrrol-1-yl)hexane and 1,10-di(1H-pyrrol-1-yl)decane were prepared as described below.

### Surface characterization

### Fourier Transform infrared spectroscopy

The IR spectroscopy of nanoparticles was realized on a Spectrum 100 FT-IR spectrometer (Perkin Elmer,USA) with a diamond attenuated total reflectance (ATR) top plate accessory. The samples were scanned 3 times at 1 cm⁻¹ spectral resolution over the range of 450 cm⁻¹ to 4000 cm⁻¹. The spectra reported in this paper were obtained by subtracting the background spectra from the measured spectra.

### Contact angles measurements

The contact angle measurements were performed using a DSA30 goniometer (Krüss). The static contact angles were determined with the sessile-drop method using 2µL droplets of probe liquids of various surface tensions: water (72.8 mN/m), diiodomethane (50.8 mN/m), hexadecane (27.6 mN/m).

### Scanning electron microscopy

The morphology was evaluated by the scanning electron microscopy (SEM) with a Phenom ProX microscope and a 276 JEOL 6700F microscope after a platinum coating.

### Adherence tests

The test was performed in accordance with PSTC 101 standards. An adhesive tape (Elcometer 9358) was pasted on the fabric and removed horizontally using a 200 g weight.

### Example 1. Preparation of starting materials and a material of the invention

### a) Preparation of monomers of formula (I):

2-(1H-pyrrol-3-yl)ethanol ("pyrrole-OH") was prepared in four steps starting from pyrrole (Ho-Hoang et al., Synth. Commun., 1996, 26, 1289-1304, Ho-Hoang et al., Synth. Met., 1994, 62, 277-280, Ho-Hoang et al. J. Mater. Chem., 1996, 6, 1107-1112, Kakushima et al., J. Org. Chem., 1983, 48, 3214-3219), as shown in Scheme 1.

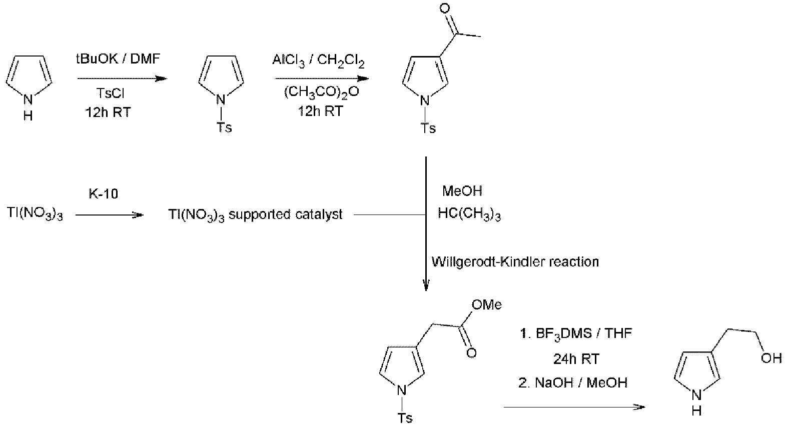

### b) Preparation of cross-linkers of formula (IV):

The following dipyrrolylalkanes ("py-Cₙ-py"): 1,3-di(1H-pyrrol-1-yl)propane ("py-C₃-py"), 1,6-di(1H-pyrrol-1-yl)hexane ("py-C₆-py"), and 1,10-di(1H-pyrrol-1-yl)decane ("py-C₁₀-py"), were synthesized in two steps from pyrrole: potassium pyrrolate was first synthesized adding drop by drop pyrrole (1 eq) to potassium metal (1.5 eq) in THF and under argon atmosphere. After a day, the salt was washed with THF. Dibromo-propane, -hexane or -decane (1 eq) in THF, were then added to potassium pyrrolate (2 eq) in DMSO and stirred a day. Water was then added and the product was extracted with ethyl acetate and purified by column chromatography with eluent (chloroform/cyclohexane) (1/1) (Bidan et al., Tetrahedron Lett., 1985, 26, 735-736, Taranekar et al., Langmuir, 2002, 18, 21).

### c) Preparation of silica nanoparticles functionalized with (pyrrolyl)butyric acid

Nanoparticles functionalized with the monomer, having a mean diameter of 64 nm, were synthetized as follow, based on a literature method (Zhang, J. Mater. Chem A, 2013, 1, 6226-6237).
i) Absolute ethanol (100 mL) was mixed with 10 mL of ammonia (35%) and stirred during 15 min at 55°C. Tetraethoxysilane (5 mL) was added dropwise and the mixture was stirred during 24h at 55°C. The particles were centrifuged at 10 000g for 10 min, then washed thrice with ethanol and dried in an oven at 90°C to provide 1.45g of silica nanoparticles. IR(main vibrations): υ = 1060, 953, 795, 552 cm⁻¹.
ii) Silica nanoparticles were then functionalized using (3-aminopropyl)triethoxysilane following the literature (L. Clement et al., Science of the Total Environment 2013, 120-128, 450-451; A. Zenerino et al., Reactive and Functional Polymers 2013, 73, 1065-1071). 2 g of fumed silica nanoparticles previously dried in an oven were added with 100 mL of anhydrous toluene under argon atmosphere in a round-bottom flask. Then, 7 mL of (3-aminopropyl)triethoxysilane was added and the reaction was carried out at reflux for 4h. The nanoparticles were washed by centrifugation (8000g, 5 min) with toluene, ethanol and deionized water, and dried overnight in an oven at 90°C.
   IR (main vibrations): υ = 3649, 2956, 2885, 1663,1560, 1388, 1083, 968, 808 cm⁻¹.
iii) Functionalized nanoparticles were then grafted to the monomer 4-(3-pyrrolyl)butyric acid. A mixture of EDC (1.5 eq/monomer) and NHS (1/15 of EDC) was added to a solution of monomer in ethanol (2.5 mL/mg of monomer) and was stirred during 1h at room temperature. A solution of nanoparticles in water (25 mg/mL) (0,9 eq/monomer) was then added and the reaction was prolonged 5 days at room temperature. The product was purified by dialysis (MWCO: 3500) and washed by centrifugation.
   IR (main vibrations): 3321, 2928, 2850, 1626, 1571, 1534, 1310, 1243, 1080, 892, 804,650, 641 cm⁻¹ .

Nanoparticles functionalized with the monomer having a mean diameter of 22 nm were prepared by implementing the above steps (ii) and (iii) starting from commercially available silica nanoparticles of 14 nm mean diameter.

Nanoparticles functionalized with the monomer were measured on SEM pictures of the coated fabrics, their mean diameter were 22 ± 4 nm and 64 ± 9 nm.

### d) Preparation of materials according to the invention

The textile samples were irradiated using oxygen plasma produced from a P300 plasma device (Alliance Concept, France). The schematic diagram and the complete details of the device is described in H.S. Salapare III et al. Biomimetics 2019, 4, 42. The vacuum chamber was first evacuated using a 20 m³/h rotary pump and the base pressure was achieved at 6.0 × 10⁻² mbar. Oxygen gas was then injected inside the vacuum chamber at a constant flow rate of 20 sccm, the operating pressure stabilized at 2.41 × 10⁻¹ mbar before plasma was ignited. The excitation frequency was fixed at 13.56 MHz with a pulsing duty cycle of 50%.

Nylon samples: two sets of plasma parameters were used: 100 W power at an irradiation time of 120 s and 50 W power for 60 s. The DC self-bias voltage for the said parameters were 452 V and 305 V, respectively.

Cotton samples: the power used was 100 W at an irradiation time of 10 min and with a DC self-bias voltage of 394 V.

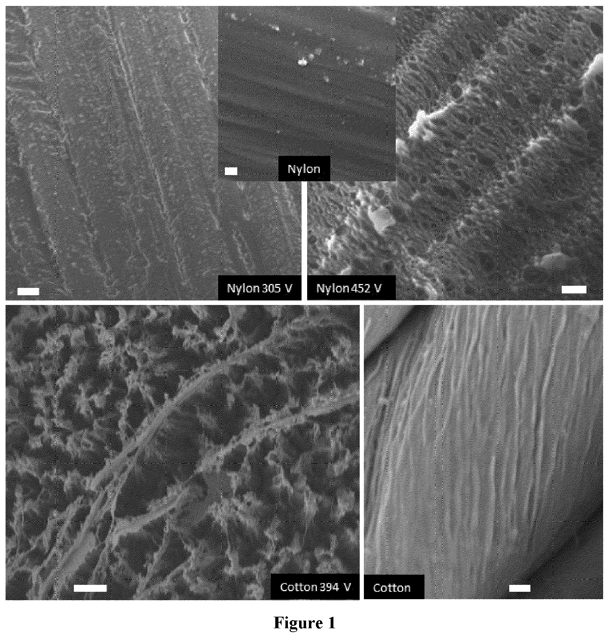

Figure 1 shows SEM images of plasma treated nylon and cotton fabrics (Nylon - 305 V, Nylon - 452 V, Cotton - 394 V).

Immediately after the plasma treatment, the nylon or cotton samples were immerged in a solution of naphthalenesulfonic acid (NSA) and a solution of monomers (10 mM) in deionized water for pyrrole-OH, and ethanol for the others (i.e. py-Cₙ-py and/or 4-(3-pyrrolyl)butyric acid grafted nanoparticles) was added. The concentrations ratio in the polymerization bath (20mL) was 1/0.45 monomer/salt. The samples were stirred during 24 h at room temperature (48 h if the solution comprises the silica nanoparticles). The samples were then profusely washed with distilled water and ethanol and dried overnight at ambient temperature.

A fluorinated carboxylic acid of formula (III) (wherein Q' is COOH, Z1 is C₂H₄, and Z2 is C₄F₉, C₆F₁₃ or C₈F₁₇) (1 eq.) was mixed to 1.9 eq. of EDC and a catalytic amount of DMAP in 20 mL of dichloromethane. After stirring for 30 min, the pyrrole-OH grafted nylon sample (optionally copolymerized with py-Cₙ-py and/or with 4-(3-pyrrolyl)butyric acid grafted silica nanoparticles) was added to the mixture and stirred for 5 days at room temperature.

### Example 2. Characterization of the materials of the invention

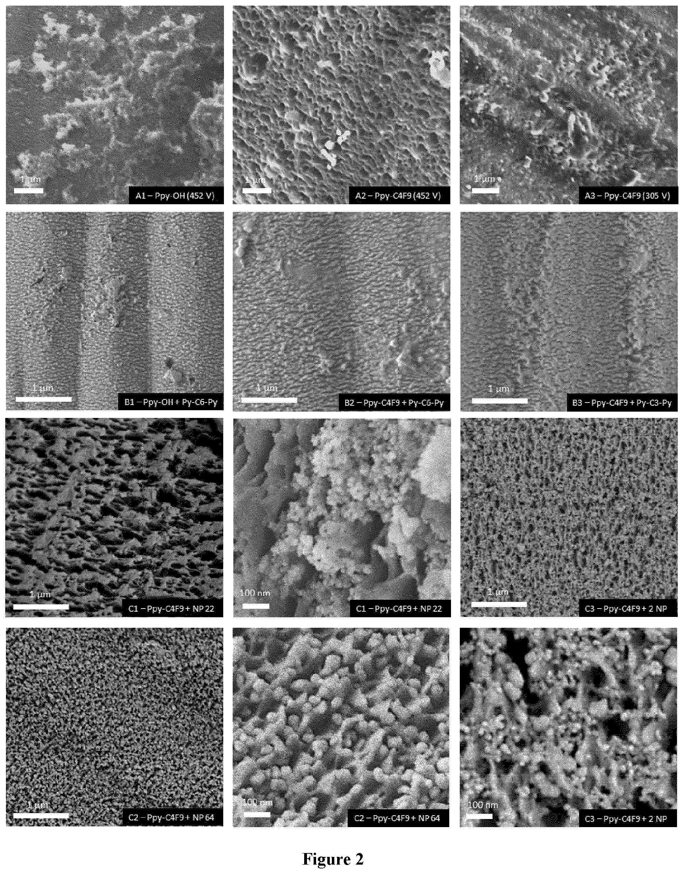

Coated nylon prepared according to the process of the invention were observed by SEM (Figure 2 and Table 1).

**Table 1.**

| | DC self-bias voltage | Monomer (II) | Cross-linker (IV) | Silica nanoparticles | Fluorinated acid (III) (Z1 ; Z2) |
|---|---|---|---|---|---|
| A1 | 452 V and 305 V | Pyrrole-OH | - | - | - |
| A2 | 452 V | Pyrrole-OH | - | - | C₂H₄ ; C₄F₉ |
| A3 | 305 V | Pyrrole-OH | - | - | C₂H₄ ; C₄F₉ |
| B1 | 452 V | Pyrrole-OH | py-C₆-py | - | - |
| B2 | 452 V | Pyrrole-OH | py-C₆-py | - | C₂H₄ ; C₄F₉ |
| B3 | 452 V | Pyrrole-OH | py-C₃-py | - | C₂H₄ ; C₄F₉ |
| C1 | 452 V | Pyrrole-OH | - | 22 nm | C₂H₄ ; C₄F₉ |
| C2 | 452 V | Pyrrole-OH | - | 64 nm | C₂H₄ ; C₄F₉ |
| C3 | 452 V | Pyrrole-OH | - | 22 nm and 64 nm | C₂H₄ ; C₄F₉ |

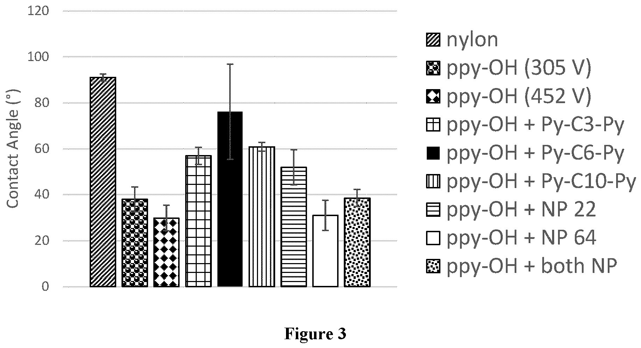

The water contact angles reduce from 91.0° ±1.6° for pure nylon to around 30° for polypyrrole-OH (Figure 3), which demonstrates that pyrrole-OH has polymerized on nylon fabrics. Furthermore, samples with copolymers of py-Cₙ-py and pyrrole-OH are more hydrophobic than only polypyrrole-OH, the bifunctional pyrroles are indeed more hydrophobic than pyrrole-OH, but less hydrophobic than pure nylon because of polypyrrole-OH. Nylon samples with nanoparticles were more hydrophilic.

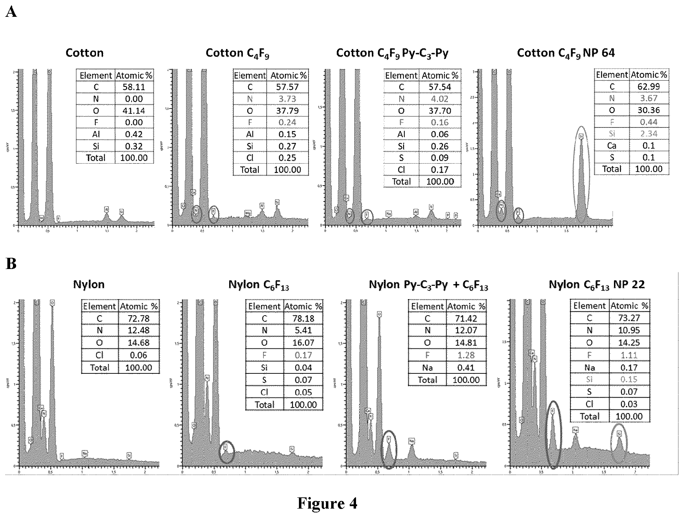

EDX analyses enabled to characterize the polymer coatings on cotton samples. Figure 4A shows the distribution of the nitrogen element which is only present on the cotton samples inside the coating. Traces can be visible even on the non-coated sample, because of the dinitrogen of the air, even if the analyses are realized with a partial vacuum.

EDX analyses also confirmed the efficiency of the fluorinated post-grafting for each sample (Figures 4A & 4B). The peak of silicon can also be observed on the spectra corresponding to the silica nanoparticles.

### Example 3. Properties of the materials of the invention

### 1. Wettability

Table 2 shows the wettability results of the textiles coated with a layer formed by a plasma induced polymerization of Pyrrole-OH, followed by a fluorinated post-grafting. The contact angles of the fabrics increase after the post-grafting due to the added fluorinated alkyl chain. The post-grafted nylon fabrics are all hydrophobic with water contact angles (« *θ*_{w} ») up to 126°. The C₆F₁₃-grafted chains are slightly less hydrophobic than the others, which may be explained by a lower yield of post-grafting. The samples containing Ppy-C₈F₁₇ are the most oleophobic ones with best contact angles of 112° and 111° for diiodomethane (« *θ*_{diiodo} ») and hexadecane (« *θ*ₙₑₓₐ ») respectively. The samples treated with a 452 V DC self-bias voltage plasma are slightly more oleophobic than with 305 V, especially for C₆F₁₃ and C₈F₁₇ chains. This plasma parameter was hence selected for the tests shown in Tables 3 and 4. For the cotton fabric which is very hydrophilic, the water droplets were absorbed by the samples except for the C₆F₁₃-grafted one which was hydrophilic with a contact angle of 60°. Nevertheless, both fluorinated grafted samples exhibited oleophobic properties with diiodomethane with contact angles between 115 and 120°.

**Table 2.**

| | Nylon | | | | Cotton | | |
|---|---|---|---|---|---|---|---|
| Polymer | Plasma | *θ*_{w} [deg] | *θ*_{diiodo} [deg] | *θ*ₕₑₓₐ [deg] | *θ*_{w} [deg] | *θ*_{diiodo} [deg] | *θ*ₕₑₓₐ [deg] |
| Pure fabric | - | 91.0 ±1.6 | 0 | 0 | 0 | 0 | 0 |
| Ppy-OH | 452 V | 29.8 ±5.5 | 0 | 0 | 0 | 0 | 0 |
| | 305 V | 37.9 ±5.3 | 0 | 0 | | | |
| Ppy-C₄F₉ | 452 V | 125.3 ±13.1 | 101.5 ±18.5 | 73.1 ±33.0 | 0 | 111.8 ±8.3 | 0 |
| | 305 V | 121.3 ±6.8 | 102.7 ±9.5 | 73.2 ±6.0 | | | |
| Ppy-C₆F₁₃ | 452 V | 109.9 ±27.9 | 114.1 ±2.8 | 105.7 ±8.0 | 59.8 ±12.4 | 118.5 ±8.3 | 0 |
| | 305 V | 111.8 ±18.8 | 103.3 ±14.4 | 83.5 ±17.9 | | | |
| Ppy-C₈F₁₇ | 452 V | 134.2 ±10.8 | 116.4 ±5.6 | 109.2 ±0.4 | | | |
| | 305 V | 128.1 ±7.4 | 110.8 ±3.0 | 103.4 ±0.5 | | | |

| | | | | | | | |
|---|---|---|---|---|---|---|---|
| * Ppy-OH refers to a polymer of pyrrole-OH * Ppy-**C₄F₉** refers to a polymer of pyrrole-OH onto which HOOC-C₂H₄-**C₄F₉** has been grafted. The same applies to the other polymers. | | | | | | | |

Table 3 shows the wettability results of the textiles coated with a layer formed by a plasma induced co-polymerisation of Pyrrole-OH and Py-Cₙ-Py, followed by a fluorinated post-grafting. The C₄F₉ post-grafted coating was the most hydrophobic on nylon fabrics with contact angles reaching 125° for each crosslinking length. The shorter fluorinated chains gave the best hydrophobic results, which may be due to a higher yield of post-grafting. On the contrary, the C₆F₁₃ grafted samples were the most oleophobic, contact angles reaching 120° with diiodomethane and 111° with hexadecane, whereas the C₄F₉ ones reached barely 90° with diiodomethane and fell to 35° with hexadecane. No major differences in the wetting properties were observed between the different crosslinking length tested. As Py-C₃-Py gave the best contact angles, the method was tested on cotton samples. The treated cotton fabrics remained hydrophobic but showed good oleophobic properties with diiodomethane contact angles up to 118° with both short-fluorinated chains.

**Table 3.**

| | **Nylon** | | | **Cotton** | | |
|---|---|---|---|---|---|---|
| Polymer | *θ*_{w} [deg] | *θ*_{diiodo} [deg] | *θ*ₕₑₓₐ [deg] | *θ*_{w} [deg] | *θ*_{diiodo} [deg] | *θ*ₕₑₓₐ [deg] |
| Pure fabric | 91.0 ±1.6 | 0 | 0 | 0 | 0 | 0 |
| Ppy-C₄F₉ + Py-C₃-Py | 124.9 ±1.9 | 92.4 ± 11.4 | 34.6 ±8.3 | 0 | 118.6 ±10.7 | 0 |
| Ppy-C₄F₉ + Py-C₆-Py | 124.8 ±2.5 | 73.5 ± 6.1 | 12.5 ±8.3 | | | |
| Ppy-C₄F₉ + Py-C₁₀-Py | 122.3 ±7.4 | 95.7 ±10.5 | 0 | | | |
| Ppy-C₆F₁₃ + Py-C₃-Py | 86.9 ± 8.4 | 120.8 ± 12.2 | 101.6 ±5.6 | 66.7 ±5.7 | 118.9 ±8.6 | 0 |
| Ppy-C₆F₁₃ + Py-C₆-Py | 64.8 ±11.1 | 106.1 ± 8.1 | 111.0 ±4.0 | | | |
| Ppy-C₆F₁₃ + Py-C₁₀-Py | 60.8 ± 10.4 | 107.0 ± 5.5 | 111.6 ±4.6 | | | |

| | | | | | | |
|---|---|---|---|---|---|---|
| *Ppy-**C₄F₉** + Py-C₃-Py refers to a polymer of pyrrole-OH and Py-C₃-Py, onto which HOOC-C₂H₄-**C₄F₉** has been grafted. The same applies to the other polymers. | | | | | | |

Table 4 shows the wettability results of the textiles coated with a layer formed by a plasma induced co-polymerisation of Pyrrole-OH and silica nanoparticles grafted to (pyrrolyl)butyric acid monomers, followed by a fluorinated post-grafting. Two sizes of nanoparticles were tested: 22 and 64 nm, as well as a mixture of both. Best hydrophobic and oleophobic properties were obtained with the bigger nanoparticles, with contact angles up to 137° with water, 126° with diiodomethane and 127° with hexadecane for the longer fluorinated chain. The nanoparticles add again a roughness on the fibers that enhances the hydrophobicity and oleophobicity compared to the layers tested in Table 3. Fabrics coated with the mixture of nanoparticles showed even higher hydrophobic properties for cotton (143°) but not for nylon and also higher or equivalent oleophobic properties (up to 133° for diiodomethane and 132° with hexadecane). Best results were obtained with C₈F₁₇.

Interestingly, good results were also obtained with layers comprising nanoparticles of 64 nm or a mixture of nanoparticles of both sizes and post-grafted with C₆F₁₃ and then with C₄F₉ (Ppy-(C₄F₉ + C₆F₁₃) + NP 64 nm; Ppy-(C₄F₉ + C₆F₁₃) + both NP). The hydrophobicity of the resulting samples was indeed enhanced compared to a simple post-grafting, and the oleophobicity was higher than for samples post-grafted with C₄F₉ only but lower than with C₆F₁₃ only.

**Table 4.**

| | **Nylon** | | | **Cotton** | | |
|---|---|---|---|---|---|---|
| Polymer | *θ*_{w} [deg] | *θ*_{diiodo} [deg] | *θ*ₕₑₓₐ [deg] | *θ*_{w} [deg] | *θ*_{diiodo} [deg] | *θ*ₕₑₓₐ [deg] |
| Pure fabric | 91.0 ±1.6 | 0 | 0 | 0 | 0 | 0 |
| Ppy-C₄F₉ + NP 22 nm | 82.4 ± 2.2 | 87.9 ±5.6 | 6.9 ±15.5 | 127.4 ±9.3 | 122.6 ±5.7 | 0 |
| Ppy-C₄F₉ + NP 64 nm | 130.2 ± 3.9 | 114.3 ± 0.8 | 52.5 ± 17.8 | 130.6 ± 6.7 | 118.7 ± 7.0 | 0 |
| Ppy-C₄F₉ + both NP | 109.4 ±4.0 | 106.0 ± 4.8 | 28.9 ± 2.4 | 127.1 ± 5.5 | 127.1 ± 8.2 | 0 |
| Ppy-C₆F₁₃ + NP 22 nm | 8.8 ±19.7 | 105.4 ±11.3 | 111.2 ±4.6 | 0 | 127.1 | 122.6 ±3.6 |
| | | | | | ±11.2 | |
| Ppy-C₆F₁₃ + NP 64 nm | 113.5 ±6.7 | 119.5 ± 5.3 | 123.6 ± 6.6 | 120.6 ± 8.4 | 132.9 ± 3.9 | 119.1 ± 8.4 |
| Ppy-C₆F₁₃ + both NP | 115.6 ± 4.0 | 133.1 ± 6.2 | 118.3 ± 4.0 | 133.6 ± 7.7 | 132.7 ± 3.6 | 132.3 ± 3.6 |
| Ppy-C₈F₁₇ + NP 22 nm | 103.8 ±7.5 | 111.2 ±6.9 | 76.6 ±29.9 | 121.9 ±8.2 | 121.9 ±8.2 | 0 |
| Ppy-C₈F₁₇ + NP 64 nm | 137.1 ± 7.8 | 125.4 ± 7.2 | 104.0 ± 7.2 | 138.7 ± 5.0 | 126.5 ± 7.8 | 127 ± 6.0 |
| Ppy-C₈F₁₇ + both NP | 131.8 ± 4.6 | 130.5 ± 7.0 | 111.7 ± 7.5 | 143.2 ± 7.6 | 131.9 ± 7.3 | 111 ± 10.2 |
| Ppy-(C₄F₉ + C₆F₁₃) + NP 64 nm | 137.3 ± 3.4 | 115.6 ± 2.5 | 86.9 ± 15.6 | 139.2 ± 6.4 | 115.1 ± 6.1 | 0 |
| Ppy-(C₄F₉ + C₆F₁₃) + both NP | 113.6 ± 3.6 | 119.9 ± 8.3 | 80.1 ± 3.3 | 135.8 ± 5.2 | 120.0 ± 2.6 | 0 |

| | | | | | | |
|---|---|---|---|---|---|---|
| *Ppy-C₄F₉ +NP 22 nm refers to a polymer of pyrrole-OH monomer and 22 nm silica nanoparticles-functionalized 4-(3-pyrrolyl)butyric acid monomer, onto which HOOC-C₂H₄-C₄F₉ has been grafted. The same applies to the other polymers. "Both NP" means that 22 nm silica nanoparticles-functionalized 4-(3-pyrrolyl)butyric acid monomer and 64 nm silica nanoparticles-functionalized 4-(3-pyrrolyl)butyric acid monomer were used. "Ppy-(**C₄F₉** + **C₆F₁₃**)" means that both HOOC-C₂H₄-**C₆F₁₃** and HOOC-C₂H₄-**C₄F₉** have been used for grafting. | | | | | | |

### 2. Adherence tests

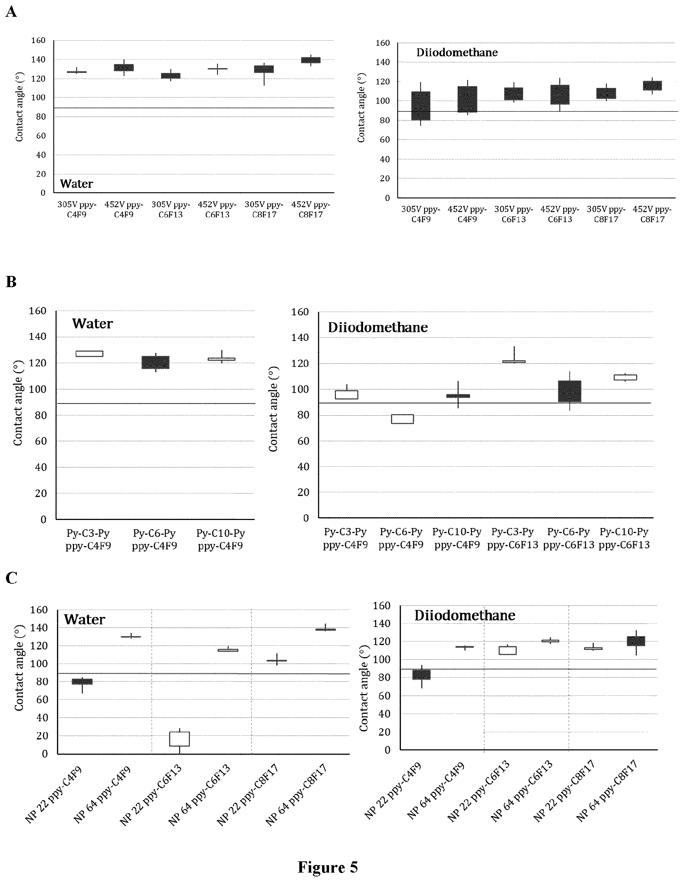

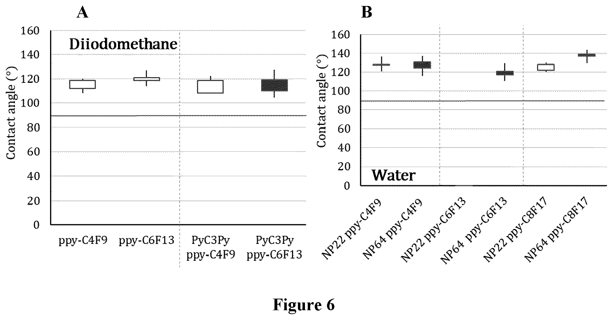

In order to characterize the adherence of the coating, water and/or diiodomethane contact angles were measured before and after performing the adherence tests on the nylon (Figure 5) and cotton (Figure 6) coated fabrics.

Figure 5A shows that low or moderate contact angle variations are obtained for coatings formed by plasma-induced polymerization of Pyrrole-OH (DC self-bias voltage: 305 V or 452 V), and subjected to a fluorinated post-grafting (C4F9, C6F13, C8F17). This demonstrates a high or good adherence of the omniphobic coating.

Figure 5B shows that the adherence can be further improved when a cross-linker py-Cₙ-py is used in the plasma-induced polymerization. The improved adherence is obtained regardless of the length of the carbon chain of the cross linker and the length of the fluorinated chain.

Figure 5C shows that the adherence can be also improved when silica nanoparticles-functionalized 4-(3-pyrrolyl)butyric acid monomer is used in the plasma-induced polymerization. The improved adherence is obtained regardless of the diameter of the nanoparticles (22 nm or 64 nm) and the length of the fluorinated chain.

Figure 6 shows that a high or good adherence of a coating formed by plasma-induced polymerization of Pyrrole-OH, optionally copolymerized with a cross-linker py-Cₙ-py (Figure 6A, right part of the graph) or with silica nanoparticles-functionalized 4-(3-pyrrolyl)butyric acid monomer (Figure 6B), can also be reached with cotton fabrics.

### REFERENCES

[1] J. A. Kleingartner, et al. Langmuir 2015, 31, 13201-13213
[2] D. Xiong, et al., Langmuir 2012, 28, 6911
[3] S. Pan, et al. AIChE Journal, 2014, Vol. 60, No. 8
[4] R. Georg et al., Adv. Mater. 2006, 18, 2758-2762
[5] R. Georg et al. Applied Surface Science, 2012, 258, 3835-3840
[6] S.A. Brewer, et al., Applied Surface Science, 2008, 254, 6450-6454
[7] H. Wang, et al. ACS Appl. Mater. Interfaces, 2013, 5, 10221-10226
[8] X. Zhou, et al. Appl. Surf. Sci., 2013, 276, 571-577
[9] H. Wang, et al. Soft Matter, 2011, 7, 8158
[10] H. Wang, et al. Soft Matter 2013, 9, 277-282
[11] H. Wang, et al., Soft Matter, 2013, 9, 277
[12] C. Xie et al. Materials Letters 218, 2018, 213-216
[13] N. Dutta Gupta, J. Appl. Polym. Sci. 2014, 39771

## Claims

1. A process comprising the following successive steps:
(a) irradiating a textile with plasma;
(b) contacting the irradiated textile of step (a) with a solution comprising a compound of formula (I):
X-Y-Q (I),
wherein
X is a conducting monomer residue,
Y is a C₁-C₁₂ aliphatic linker, and
Q is -OH, -NH₂, or -C(O)OR, wherein R is a hydrogen or a C₁-C₆ hydrocarbon group,
under conditions allowing to form a conducting polymer at least partially coated on the textile, covalently bonded thereto, and comprising monomer units of formula (II): 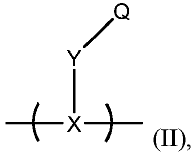 wherein
X is a conducting monomer residue,
Y is a C₁-C₁₂ aliphatic linker, and
Q is -OH, -NH₂, or -C(O)OR, wherein R is a hydrogen or a C₁-C₆ hydrocarbon group; and
(c) contacting the coated textile of step (b) with a fluorinated carboxylic acid of formula (III):
Q'-(Z1)ₙ-Z2 (III),
wherein
n is 0 or 1,
Z1 is a C₁-C₁₂ aliphatic linker,
Z2 is a C₁-C₁₂ perfluoroalkyl, and
Q' is -OH, -NH₂, or -C(O)OR, wherein R is a hydrogen or a C₁-C₆ hydrocarbon group,
under conditions allowing to form an ester or amide bond between Q of at least one monomer unit of formula (II) and Q' of said fluorinated carboxylic acid of formula (III).

2. The process according to claim 1, wherein X is a residue of pyrrole, thiophene, 3,4-ethylenedioxythiophene, aniline, or a combination thereof, preferably a residue of pyrrole, thiophene, or 3,4-ethylenedioxythiophene, more preferably a residue of pyrrole.

3. The process according to claim 1 or 2, wherein Y is a C₁-C₆ alkylene linker, preferably an ethylene.

4. The process according to any one of claims 1 to 3, wherein Z1 is a C₁-C₆ alkylene linker and Z2 is a C₄-C₈ perfluoroalkyl.

5. The process according to any one of claims 1 to 4, wherein Q is -OH and Q' is -COOH.

6. The process according to any one of claims 1 to 5, wherein the textile is cotton or nylon.

7. The process according to any one of claims 1 to 6, wherein said plasma is an air or O₂ plasma.

8. The process according to any one of claims 1 to 7, wherein plasma irradiation in step (a) is carried out under a DC self-bias voltage comprised between 200 V and 600 V, preferably between 300 V and 500 V.

9. The process according to any one of claims 1 to 8, wherein the solution in step (b) further comprises the following cross-linker of formula (IV):
X'-Y'-X' (IV),
wherein each X' is a conducting monomer residue, and Y' is a C₁-C₁₅ alkylene linker.

10. The process according to claim 9, wherein the cross-linker of formula (IV) is represented as follows: 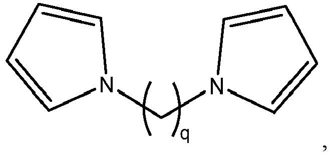 wherein q is an integer from 1 to 15.

11. The process according to any one of claims 1 to 10, wherein the solution in step (b) further comprises silica nanoparticles functionalized with at least one conducting monomer residue.

12. The process according to claim 11, wherein the silica nanoparticles have a mean diameter comprised between 10 nm and 200 nm, preferably between 20 nm and 100 nm.

13. A material comprising a textile covalently bonded to and at least partially coated with a conducting polymer comprising at least one monomer unit of formula (V): 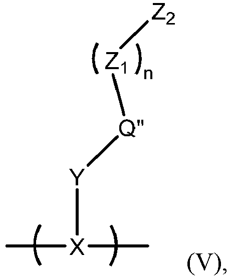 wherein
n is 0 or 1,
X is a conducting monomer residue,
Y is a C₁-C₁₂ aliphatic linker,
Z1 is a C₁-C₁₂ aliphatic linker,
Z2 is a C₁-C₁₂ perfluoroalkyl, and
Q" is an ester or amide function.

## Patentansprüche

1. Verfahren, das die folgenden aufeinanderfolgenden Schritte umfasst:
(a) Bestrahlen eines Textils mit Plasma;
(b) Kontaktieren des bestrahlten Textils aus Schritt (a) mit einer Lösung, die eine Verbindung der Formel (I) umfasst:
X-Y-Q (I),
wobei
X ein leitender Monomerrest ist,
Y ein C₁-C₁₂ aliphatischer Linker ist, und
Q -OH, -NH₂ oder -C(O)OR ist, wobei R ein Wasserstoff oder eine C₁-C₆-Kohlenwasserstoffgruppe ist,
unter Bedingungen, die die Bildung eines leitenden Polymers ermöglichen, das zumindest teilweise auf das Textil aufgetragen, kovalent daran gebunden ist und Monomereinheiten der Formel (II) umfasst: 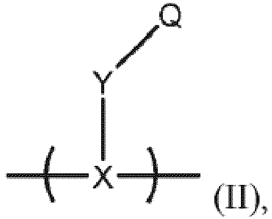 wobei
X ein leitender Monomerrest ist,
Y ein C₁-C₁₂ aliphatischer Linker ist, und
Q -OH, -NH2 oder -C(O)OR ist, wobei R ein Wasserstoff oder eine C₁-C₆-Kohlenwasserstoffgruppe ist; und
(c) Kontaktieren des beschichteten Textils aus Schritt (b) mit einer fluorierten Carbonsäure der Formel (III):
Q'-(Z1)n-Z2 (III),
wobei
n 0 oder 1 ist,
Zl ein C₁-C₁₂ aliphatischer Linker ist,
Z2 ein C₁-C₁₂ Perfluoralkyl ist, und
Q' -OH, -NH2, oder -C(O)OR ist, wobei R ein Wasserstoff oder eine C₁-C₆-Kohlenwasserstoffgruppe ist,
unter Bedingungen, die die Bildung einer Ester- oder Amidbindung zwischen Q von mindestens einer Monomereinheit der Formel (II) und Q' der fluorierten Carbonsäure der Formel (III) ermöglichen.

2. Verfahren nach Anspruch 1, wobei X ein Rest von Pyrrol, Thiophen, 3,4-Ethylendioxythiophen, Anilin oder einer Kombination davon, vorzugsweise ein Rest von Pyrrol, Thiophen oder 3,4-Ethylendioxythiophen, besonders bevorzugt ein Rest von Pyrrol ist.

3. Verfahren nach Anspruch 1 oder 2, wobei Y ein C1-C6-Alkylenlinker, vorzugsweise ein Ethylen, ist.

4. Verfahren nach einem der Ansprüche 1 bis 3, wobei Z1 ein C₁-C₆-Alkylenlinker und Z2 ein C₄-C₈-Perfluoralkyl ist.

5. Verfahren nach einem der Ansprüche 1 bis 4, wobei Q -OH ist und Q' -COOH ist.

6. Verfahren nach einem der Ansprüche 1 bis 5, wobei das Textil Baumwolle oder Nylon ist.

7. Verfahren nach einem der Ansprüche 1 bis 6, wobei das Plasma ein Luft- oder O2-Plasma ist.

8. Verfahren nach einem der Ansprüche 1 bis 7, wobei die Plasmabestrahlung in Schritt (a) unter einer DC-Self-Bias-Spannung zwischen 200 V und 600 V, vorzugsweise zwischen 300 V und 500 V, durchgeführt wird.

9. Verfahren nach einem der Ansprüche 1 bis 8, wobei die Lösung in Schritt (b) außerdem den folgenden Vernetzer der Formel (IV) umfasst:
X'-Y'-X' (IV),
wobei jedes X' ein leitender Monomerrest ist und Y' ein C₁-C₈ Alkylenlinker ist.

10. Verfahren nach Anspruch 9, wobei der Vernetzer der Formel (IV) wie folgt dargestellt wird: 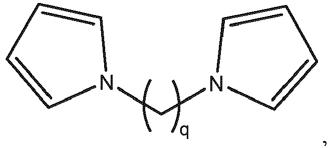 wobei q eine ganze Zahl from 1 to 15 ist.

11. Verfahren nach einem der Ansprüche 1 bis 10, wobei die Lösung in Schritt (b) außerdem Silica-Nanopartikel umfasst, die mit mindestens einem leitenden Monomerrest funktionalisiert sind.

12. Verfahren nach Anspruch 11, wobei die Silica-Nanopartikel einen mittleren Durchmesser zwischen 10 nm und 200 nm, vorzugsweise zwischen 20 nm und 100 nm, aufweisen.

13. Material, umfassend ein Textil, das kovalent an ein leitendes Polymer gebunden und zumindest teilweise damit beschichtet ist, das mindestens eine Monomereinheit der Formel (V) umfasst: 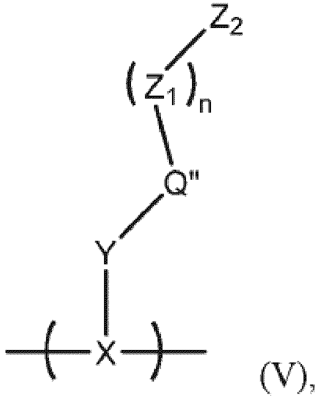 wobei
n 0 oder 1 ist,
X ein leitender Monomerrest ist
Y ein C₁-C₁₂ aliphatischer Linker ist,
Z1 ein C₁-C₁₂ aliphatischer linker ist,
Z2 ein C₁-C₁₂ Perfluoralkyl ist, und
Q" eine Ester- oder Amid-Funktion ist.

## Revendications

1. Procédé comprenant les étapes successives suivantes :
(a) irradiation d'un textile avec un plasma ;
(b) mise en contact du textile irradié de l'étape (a) avec une solution comprenant un composé de formule (I) :
X-Y-Q (I)
dans laquelle
X est un résidu de monomère conducteur,
Y est un lieur aliphatique en C₁ à C₁₂, et
Q est -OH, -NH₂ ou -C(O)OR où R est un hydrogène ou un groupe hydrocarboné en C₁ à C₆,
dans des conditions permettant la formation d'un polymère conducteur au moins partiellement déposé sous forme d'enduit sur le textile, lié de manière covalente à celui-ci, et comprenant des motifs monomères de formule (II) : 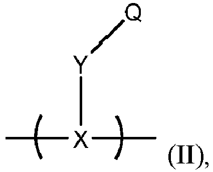 dans laquelle
X est un résidu de monomère conducteur,
Y est un lieur aliphatique en C₁ à C₁₂, et
Q est -OH, -NH₂ ou -C(O)OR où R est un hydrogène ou un groupe hydrocarboné en C₁ à C₆; et
(c) mise en contact du textile enduit de l'étape (b) avec un acide carboxylique fluoré de formule (III) :
Q'-(Z1)ₙ-Z2 (III)
dans laquelle
n vaut 0 ou 1,
Z1 est un lieur aliphatique en C₁ à C₁₂,
Z2 est un perfluoroalkyle en C₁ à C₁₂, et
Q' est -OH, -NH₂ ou -C(O)OR où R est un hydrogène ou un groupe hydrocarboné en C₁ à C₆,
dans des conditions permettant la formation d'une liaison ester ou amide entre Q d'au moins un motif monomère de formule (II) et Q' dudit acide carboxylique fluoré de formule (III).

2. Procédé selon la revendication 1, dans lequel X est un résidu de pyrrole, thiophène, 3,4-éthylènedioxythiophène, aniline, ou une de leurs combinaisons, de préférence un résidu de pyrrole, thiophène, ou 3,4-éthylènedioxythiophène, mieux encore un résidu de pyrrole.

3. Procédé selon la revendication 1 ou 2, dans lequel Y est un lieur alkylène en C₁ à C₆, de préférence un éthylène.

4. Procédé selon l'une quelconque des revendications 1 à 3, dans lequel Z1 est un lieur alkylène en C₁ à C₆ et Z2 est un perfluoroalkyle en C₄ à C₈.

5. Procédé selon l'une quelconque des revendications 1 à 4, dans lequel Q est -OH et Q' est -COOH.

6. Procédé selon l'une quelconque des revendications 1 à 5, dans lequel le textile est en coton ou en nylon.

7. Procédé selon l'une quelconque des revendications 1 à 6, dans lequel ledit plasma est un plasma à air ou à O₂.

8. Procédé selon l'une quelconque des revendications 1 à 7, dans lequel l'irradiation par plasma dans l'étape (a) est effectuée sous une tension d'auto-polarisation en courant continu comprise entre 200 V et 600 V, de préférence entre 300 V et 500 V.

9. Procédé selon l'une quelconque des revendications 1 à 8, dans lequel la solution dans l'étape (b) comprend en outre l'agent de réticulation suivant de formule (IV) :
X'-Y'-X' (IV)
dans laquelle chaque X' est un résidu de monomère conducteur, et Y' est un lieur alkylène en C₁ à C₁₅.

10. Procédé selon la revendication 9, dans lequel l'agent de réticulation de formule (IV) est représenté comme suit : 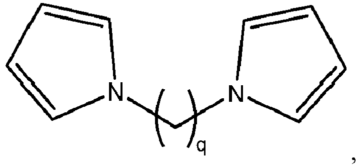 où q est un entier de 1 à 15.

11. Procédé selon l'une quelconque des revendications 1 à 10, dans lequel la solution dans l'étape (b) comprend en outre des nanoparticules de silice fonctionnalisées avec au moins un résidu de monomère conducteur.

12. Procédé selon la revendication 11, dans lequel les nanoparticules de silice ont un diamètre moyen compris entre 10 nm et 200 nm, de préférence entre 20 nm et 100 nm.

13. Matériau comprenant un textile lié de manière covalente à et enduit au moins partiellement avec un polymère conducteur comprenant au moins un motif monomère de formule (V) : 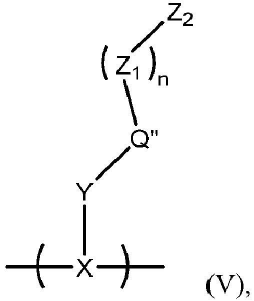 dans laquelle
n vaut 0 ou 1,
X est un résidu de monomère conducteur,
Y est un lieur aliphatique en C₁ à C₁₂,
Z1 est un lieur aliphatique en C₁ à C₁₂,
Z2 est un perfluoroalkyle en C₁ à C₁₂, et
Q" est une fonctionnalité ester ou amide.
